(19) **Europäisches Patentamt** / **European Patent Office** / **Office européen des brevets**

(11) **EP 4 091 098 B1**

(12) **FASCICULE DE BREVET EUROPÉEN**

(45) Date de publication et mention
de la délivrance du brevet:
**13.08.2025 Bulletin 2025/33**

(21) Numéro de dépôt: **21700314.4**

(22) Date de dépôt: **15.01.2021**

(51) Classification Internationale des Brevets (IPC):
*G06V 30/242* (2022.01)    *G06F 18/2321* (2023.01)
*G06F 18/2413* (2023.01)    *G06V 30/14* (2022.01)
*G06V 30/148* (2022.01)    *G06V 30/18* (2022.01)
*G06V 30/19* (2022.01)    *G07D 7/12* (2016.01)
*G07D 7/206* (2016.01)

(52) Classification Coopérative des Brevets (CPC):
**G07D 7/206; G06F 18/2321; G06F 18/24133;
G06F 18/24147; G06V 10/82; G06V 30/1448;
G06V 30/153; G06V 30/18143; G06V 30/19067;
G06V 30/242; G07D 7/12;** G06V 30/10

(86) Numéro de dépôt international:
**PCT/EP2021/050816**

(87) Numéro de publication internationale:
**WO 2021/144427 (22.07.2021 Gazette 2021/29)**

(54) **PROCÉDÉ DE TRAITEMENT D'UNE IMAGE CANDIDATE**

VERFAHREN ZUR VERARBEITUNG EINES KANDIDATENBILDES

METHOD FOR PROCESSING A CANDIDATE IMAGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.01.2020 FR 2000395**

(43) Date de publication de la demande:
**23.11.2022 Bulletin 2022/47**

(73) Titulaire: **SURYS**
**77607 Marne la Vallee Cedex 3 (FR)**

(72) Inventeurs:
• **MAHFOUDI, Gaël**
**69372 LYON CEDEX 08 (FR)**

• **PIC, Marc**
**69372 LYON CEDEX 08 (FR)**
• **MORAIN-NICOLIER, Frédéric**
**69372 LYON CEDEX 08 (FR)**
• **RETRAINT, Florent**
**69372 LYON CEDEX 08 (FR)**

(74) Mandataire: **Bouvier, Thibault**
**INPUT IP C/O INNOV-GROUP**
**310 Avenue Berthelot**
**69372 Lyon Cedex 08 (FR)**

(56) Documents cités:
**US-A1- 2007 050 360    US-A1- 2011 255 795
US-A1- 2014 219 561**

EP 4 091 098 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

DOMAINE DE L'INVENTION

La présente invention concerne le domaine du contrôle automatique d'images par ordinateur, en particulier pour la vérification de leur authenticité.

A l'heure actuelle, il est très facile et rapide de modifier une image numérique grâce à de multiples logiciels accessibles sur le marché.

Les modifications d'une image peuvent avoir une finalité esthétique, par exemple la retouche d'une photographie par un photographe ; ou une finalité ludique, par exemple dans le cadre de photomontages.

Toutefois, il est également possible de modifier une image dans le but de la falsifier, par exemple en modifiant ou en supprimant un élément d'une image, ce qui peut poser des problèmes notamment dans le cadre de la vérification de document, notamment de document d'identité, de document de valeur tels que des chèques, des tickets nominatifs, ou bien encore dans le domaine de l'art.

Par document, on entend tout document officiel, émis par un Etat, un gouvernement ou une administration, par exemple tel que : carte d'identité, passeport, permis de conduire, etc. ou tout document non officiel, émis par un organisme de droit public ou privé, par exemple tel que : carte d'abonnement, carte de transport, carte d'accès, etc. ainsi que tout document administratif, notamment des contrats ou des factures.

Au sens de la présente invention, un document peut comprendre une photographie du porteur dudit document ou non.

En termes de fraude, il est connu de modifier la photo du porteur d'un document d'identité grâce à des logiciels de morphing. Toutefois la présente invention ne vise pas à détecter la modification d'une image ou d'une photographie d'un visage.

Il est également connu des logiciels de stéganographie, qui consistent à cacher une deuxième image dans une première image. Il existe également des solutions permettant de détecter de telles manipulations d'images, qu'elles soient frauduleuses ou non. Ici aussi la présente invention ne vise pas à détecter une modification d'image par procédé stéganographique.

De manière générale, pour la vérification de l'authenticité d'une image donnée, il est courant de comparer une image candidate à une image de référence, ce qui implique deux images.

Par exemple il est connu le document US2007050360 qui vise à produire un document media mixe (MMR). A ce titre, ce document prévoit explicitement de comparer une image test avec une image de référence comprise dans une base de données, ce qui est une solution exogène.

Au contraire, il est proposé ici une solution astucieuse, dite endogène en ce qu'une image candidate se suffit à elle-même, qui vise à détecter si une partie d'une image candidate a été déplacée au sein de ladite image. Par analogie aux logiciels de traitement de texte, la présente invention vise à détecter si une partie d'une image candidate a été copiée / collée au sein de la même image.

RESUME DE L'INVENTION

Plus précisément, l'invention concerne un procédé de traitement endogène d'une image candidate, pour détecter si une partie de l'image candidate a été déplacée au sein de ladite image, ladite image candidate étant unique et représentant un document comprenant une pluralité de caractères.

Il est essentiellement caractérisé en ce qu'il comprend des étapes consistant à :

Sélectionner un ensemble de caractères parmi tout ou partie de la pluralité de caractères, ledit ensemble de caractères pouvant comprendre au moins deux sous-ensembles de caractères,
Dans l'ensemble sélectionné,

Extraire au moins l'un parmi :

au moins un ensemble de caractères individuels,
au moins un paquet de caractères, chaque paquet comprenant une pluralité de caractères adjacents deux à deux,

Enregistrer les caractères extraits individuellement ou par paquet dans une mémoire,
Comparer les caractères enregistrés deux à deux, et
Emettre un signal représentatif du résultat de la comparaison.

On peut prévoir que l'étape de sélection comprend des étapes consistant à :

appliquer un masque de sélection prédéterminé à l'image candidate, le masque comprenant un ensemble d'au moins une fenêtre,
sélectionner les caractères compris dans l'ensemble d'au moins une fenêtre,
l'étape de sélection comprenant optionnellement en outre :

repérer un ensemble d'au moins un point remarquable sur l'image candidate, et
positionner le masque de sélection en fonction de la position d'au moins un point remarquable dudit ensemble.

On peut prévoir que l'étape d'extraction comprend :

Extraire chaque caractère individuel de l'ensemble, ou chaque paquet de caractères de l'ensemble, par une boite englobante respective et
Enregistrer chaque boite englobante sous forme d'une sous-image respective (F1, F2).

On peut prévoir que l'étape de comparaison comprend :

- calculer une carte de dissimilarité locale entre :

une première sous-image (F1) d'un caractère ou d'un paquet de caractères de l'image candidate, et
une deuxième sous-image (F2) d'un autre caractère ou d'un autre paquet de caractères de l'image candidate,

- comparer ladite carte de dissimilarité locale à une valeur seuil (D_CDL).

On peut prévoir en outre une étape préalable d'apprentissage par un algorithme d'apprentissage profond configuré pour classer des caractères ou des paquets de caractères dans un ensemble d'au moins une classe, et dans lequel l'étape de comparaison comprend :

traiter chaque caractère individuel ou chaque paquet de caractères extrait par l'algorithme d'apprentissage profond, et
classer ledit caractère ou ledit paquet de caractères dans au moins une classe dudit ensemble de l'algorithme d'apprentissage profond.

On peut prévoir en outre une étape consistant à, pour un ensemble de sous-images prédéterminé, détourer le caractère ou les caractères du paquet pour au moins une sous-image dudit ensemble.
On peut prévoir que l'étape de calcul d'une carte de dissimilarité comprend des étapes consistant à :

- définir un ensemble de points remarquables sur l'image candidate,
- sélectionner une partie au moins des points remarquables définis,
- mettre en correspondance un ensemble de points remarquables pour former des couples de points remarquables,
- partitionner les couples de points remarquables mis en correspondance, et

pour chaque couple de chaque partition,
calculer une carte de dissimilarité locale entre :

une première sous-image (F1) de l'image candidate présentant une forme prédéterminée centrée sur un point remarquable dudit couple de ladite partition, et
une deuxième sous-image (F2) de l'image candidate, qui présente la même forme prédéterminée et les mêmes dimensions que la première sous-image (F1), et qui est centrée sur l'autre point remarquable dudit couple de ladite partition.

On peut prévoir que l'étape de définition d'un ensemble de points remarquables sur l'image candidate est mise en œuvre par l'un au moins parmi :

Un détecteur de Moravec,
Un détecteur de Kitchen-Rosenfeld,
Un détecteur de Beaudet,

Un détecteur SUSAN,
Un détecteur FAST,
Un détecteur de Hessian-Laplace,
Un détecteur de Kadir,
Un détecteur MSER,
Un détecteur GLOH,
Un détecteur de Harris,
Un algorithme de transformation de caractéristiques visuelles invariante à l'échelle,
Un algorithme de caractéristiques robustes accélérées,
Un algorithme de détection de points biométriques,
Un opérateur de dérivation, en particulier une différence de gaussiennes, et
Un algorithme de détection de contours, en particulier un Laplacien de gaussienne.

On peut prévoir que pour l'étape consistant à partitionner les couples de points remarquables mis en correspondance,

Chaque partition comprend l'ensemble des couples de points remarquables mis en relation qui répondent aux trois inégalités :

-

$$D1 > ||\overrightarrow{AB} - \overrightarrow{CD}|| \; ;$$

-

$$D2 > ||\overrightarrow{AC}|| \text{ et } D2 > ||\overrightarrow{BD}|| \; ;$$

-

$$D3 < ||\overrightarrow{AB}|| \text{ et } D3 < ||\overrightarrow{CD}||.$$

avec D1, D2 et D3 trois valeurs seuil prédéfinies,
(A ; B) un premier couple de points remarquables mis en correspondance,
(C ; D) un deuxième couple de points remarquables mis en correspondance ;

Ou par un algorithme de partitionnement.

Par exemple, on peut prévoir un algorithme de partitionnement non supervisé tel que :

- DBSCAN (https://fr.wikipedia.org/wiki/DBSCAN),
- OPTICS (https://en.wikipedia.org/wiki/OPTICS_algorithml,
- CURE (https://en.wikipedia.org/wiki/CURE_algorithm),
- Etc.

L'invention concerne également un programme d'ordinateur comprenant des instructions de code de programme pour l'exécution des étapes du procédé selon l'invention, lorsque ledit programme est exécuté sur un ordinateur.

D'autres caractéristiques et avantages de la présente invention apparaîtront plus clairement à la lecture de la description suivante donnée à titre d'exemple illustratif et non limitatif et faite en référence aux figures annexées.

DESCRIPTIF DES DESSINS

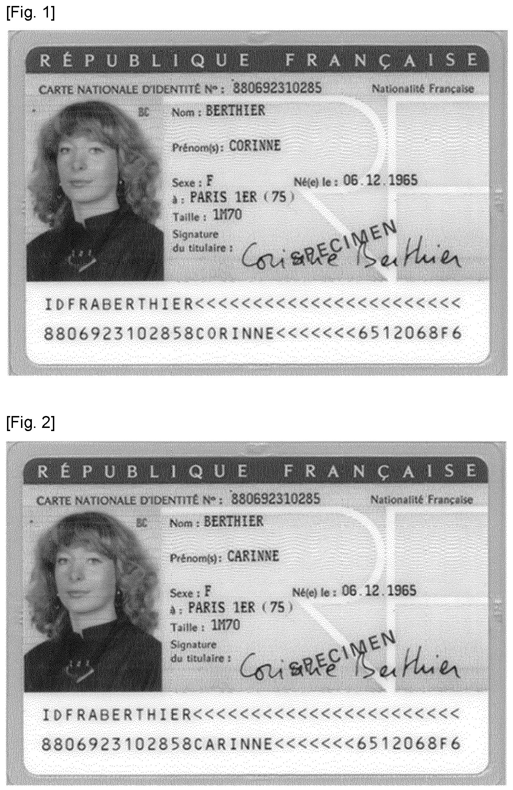

- [Fig. 1] illustre un document original,
- [Fig. 2] illustre le document de la figure 1, falsifié,

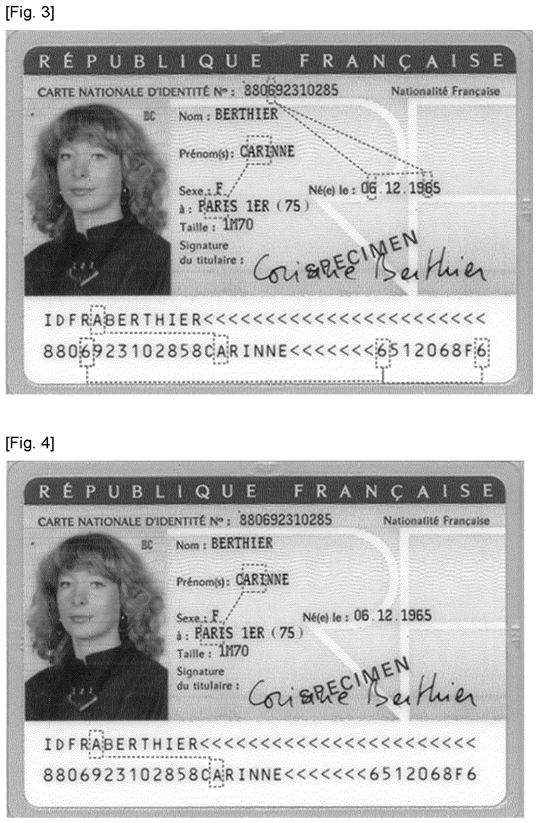

- [Fig. 3] illustre la mise en correspondance de caractères ou paquets de caractères selon l'invention,
- [Fig. 4] illustre le résultat de l'application de l'invention au document de la figure 2,
- [Fig. 5] illustre la duplication d'un objet O en un objet OD et la relation entre les points mis en correspondance selon l'invention.

DESCRIPTION DETAILLEE

Comme exposé en début de description, une image peut être altérée par ajout d'éléments d'une autre image. De telles manipulations dites exogènes sont exclues de la présente invention.

De manière endogène, une image peut être altérée en remplaçant certains éléments de celle-ci par d'autres éléments de la même image. Par exemple certains manipulateurs d'image peuvent ainsi ajouter ou intervertir des chiffres existants pour modifier un numéro, par exemple un numéro de série ; utiliser des caractères existants dans l'image pour modifier une dénomination, une contenance, etc. Ils peuvent aussi copier un élément graphique d'une image et coller cet élément graphique à un autre endroit de l'image, par un phénomène de duplication ou de clonage, éventuellement doublé de rotation, inversion, redimensionnement.

Comme les éléments remplaçants sont extraits de l'image, il peut être très difficile à l'oeil nu, voire même par traitement numérique, de détecter que celle-ci a été altérée.

Pour répondre à cette problématique, il est proposé de traiter une image candidate de la manière suivante.

**Image candidate**

Selon la présente invention, chaque image candidate est traitée de manière endogène, c'est à dire en elle-même, à l'exclusion de toute autre image de référence. Elle permet de détecter des « copier-coller » internes à l'image candidate.

En ce sens, une image candidate est unique. Par exemple, une image candidate est une image prise par un objectif d'un appareil photo ou d'un smartphone, une trame vidéo d'un flux vidéo pris par une caméra, etc. En particulier, l'image candidate est obtenue par un objectif d'un objet communicant, notamment un smartphone.

L'image candidate représente un document qui comprend une pluralité de caractères, où par « **caractère** », on entend notamment des caractères alphanumériques, kanji, tout autre caractère alphabétique ou idéogramme, ainsi que tout élément graphique stable, identifiable et porteur de sens, tels qu'un logo, un signe distinctif (notamment une marque déposée ou enregistrée), ou un sceau.

De préférence, l'un au moins des caractères du document est présent plusieurs fois dans celui-ci.

Par souci de concision, seule la page de données, ou datapage par anglicisme, d'un passeport sera décrite comme document ici.

Le document comprend une pluralité de caractères, en l'espèce alphanumériques, qui sont répartis par zones dont la position dans le document est connue, par exemple la zone MRZ.

Par ailleurs, certains caractères peuvent être génériques, c'est-à-dire communs à une pluralité de documents, et d'autres caractères peuvent être variables, c'est-à-dire spécifique à un document.

Par exemple des caractères génériques sont des libellés de champ tels que « NOM », « PRENOM », etc. et des caractères variables sont typiquement dans ce cas le contenu de ces champs, par exemple « DOE », « JOHN » etc.

**Sélection**

On prévoit de sélectionner un ensemble de caractères parmi tout ou partie de la pluralité de caractères du document.

Par exemple, on peut sélectionner le document dans son entièreté. On peut aussi sélectionner une partie du document, par exemple une zone de celui-ci, par exemple la zone MRZ ou VIS, ou encore certains champs identifiés par leur en-tête ou leur position dans le document. On peut aussi sélectionner plusieurs zones de celui-ci, chaque zone constituant un sous-ensemble.

On peut prévoir d'utiliser un masque de sélection comprenant une ou plusieurs fenêtres de sélection. De préférence le masque de sélection est un masque numérique appliqué à l'image candidate. Le masque de sélection peut également être un masque physique appliqué sur le document ou sur une image, imprimée ou affichée, de celui-ci.

On peut alors sélectionner les caractères compris la fenêtre ou les fenêtres de sélection.

On peut aussi prévoir que l'étape de sélection comprend le repérage préalable d'un ou plusieurs points remarquables sur l'image candidate, et le positionnement d'un masque de sélection en fonction de la position d'au moins un point remarquable dudit ensemble.

Par exemple, un point remarquable peut être l'un parmi :

- un amer,
- un signe distinctif,
- un code barre,

- une position prédéterminée de l'image candidate, par exemple le coin haut gauche, le centre, le coin bas gauche, etc.
- la zone MRZ d'un passeport,
- la zone VIS d'un passeport,
- une zone graphique marquée par une ou plusieurs métadonnées ou un nom de champ (NOM, PRENOM etc.),
- un paragraphe prédéterminé d'un courrier,
- l'en-tête d'un courrier,
- le pied de page d'un courrier,
- Etc.

**Extraction**

On prévoit ensuite une étape d'extraction, appliquée à l'ensemble de caractères sélectionné.

Cette étape consiste à extraire tout ou partie des caractères de l'ensemble sélectionné.

En particulier on peut prévoir d'extraire tous les caractères individuels, seulement une partie de ceux-ci ou plusieurs parties de ceux-ci.

On peut aussi prévoir d'extraire plusieurs caractères individuels par paquets, chaque paquet comprenant une pluralité de caractères adjacents deux à deux.

On peut prévoir une étape de détourage des caractères individuels ou des paquets de caractères.

Lorsque le document comprend des caractères alphanumériques, on peut prévoir à tout moment de réaliser une reconnaissance optique de caractères (OCR) au moins des caractères sélectionnés, voire de l'ensemble des caractères de l'image candidate.

Les caractères extraits individuellement ou par paquet sont enregistrés dans une mémoire.

Les caractères peuvent être extraits par boîtes englobantes : une boîte englobante respective par caractère ou par paquet de caractères. Les boîtes englobantes sont décrites par exemple par l'article de K. Khurshid, C. Faure, N. Vincent. « Recherche de mots dans des images de documents par appariement de caractères ». Colloque International Francophone sur l'Ecrit et le Document, Oct 2008, France.pp.91-96. hal-00334401 (https://hal.archives-ouvertes.fr/hal-00334401/document)

Chaque boite englobante, ou plus précisément le contenu de chaque boîte englobante, est enregistrée sous forme d'une sous-image F1, F2, etc. respective.

**Comparaison**

On peut alors comparer les caractères enregistrés, ou les paquets de caractères enregistrés, deux à deux, et émettre un signal représentatif du résultat de la comparaison.

L'étape de comparaison peut comprendre la comparaison des sous-images F1, F2, etc. respectives deux à deux.

Dans un mode de réalisation, la comparaison est mise en oeuvre par calculs de cartes de dissimilarités, indistinctement appelées cartes de similarités.

Selon diverses variantes, on peut prévoir de calculer une ou plusieurs mesures de similarité locale ou globale et spatiale.

Par exemple, selon une variante, pour des mesures globales non spatiales entre une première sous-image F1 d'un caractère ou d'un paquet de caractères de l'image candidate et une deuxième sous-image F2 d'un autre caractère ou d'un autre paquet de caractères de l'image candidate, on peut prévoir de calculer au moins l'une des valeurs parmi :

  Une distance de Chernoff,
  Une distance de Bhattacharyya,
  Une divergence de Kullback-Leibler,
  Une distance du chi2,
  Etc.

Selon une autre variante, pour des mesures globales et spatiales entre une première sous-image F1 d'un caractère ou d'un paquet de caractères de l'image candidate et une deuxième sous-image F2 d'un autre caractère ou d'un autre paquet de caractères de l'image candidate, on peut prévoir de calculer au moins l'une des valeurs parmi :

  Une erreur quadratique moyenne (MSE),
  Une Cross-Corrélation,
  Une Information mutuelle,
  Etc.

Selon une autre variante, pour des mesures locales entre une première sous-image F1 d'un caractère ou d'un paquet de caractères de l'image candidate et une deuxième sous-image F2 d'un autre caractère ou d'un autre paquet de caractères de l'image candidate, on peut prévoir de calculer au moins l'une des valeurs parmi :

Une carte de dissimilarité locale (CDL),
Une similarité structurelle (SSIM),
Etc.

Par exemple, pour une CDL, on prévoit de calculer une carte de dissimilarité locale entre :

- une première sous-image F1 d'un caractère ou d'un paquet de caractères de l'image candidate, et
- une deuxième sous-image F2 d'un autre caractère ou d'un autre paquet de caractères de l'image candidate.

Puis on prévoit de comparer ladite carte de dissimilarité locale à une valeur seuil D_CDL prédéterminée.

Plus précisément, pour le calcul d'une carte de dissimilarité locale :
On prévoit tout d'abord d'identifier sur l'image candidate un ensemble de points remarquables, également appelés « points d'intérêt » ou « points clés».

**Points remarquables**

On prévoit de définir un ensemble de points remarquables sur l'image candidate. Au sens de la présente invention, on entend indistinctement « définition », « extraction » et « détection » de points remarquables.

Un point remarquable est défini comme un point de l'image candidate, c'est-à-dire un pixel ou un ensemble de pixels adjacents deux à deux, pour lequel le gradient de contraste, selon une direction et une distance prédéfinies, est supérieur à une valeur seuil prédéfinie.

Chaque point remarquable est défini notamment par ses coordonnées sur l'image candidate. Chaque point remarquable est associé à une orientation intrinsèque, c'est-à-dire ne dépendant que du contenu local de l'image candidate autour du point remarquable, au facteur d'échelle considéré.

Chaque point remarquable est caractérisé par un unique descripteur. Les descripteurs sont des éléments vectoriels qui caractérisent le contenu visuel de l'image candidate de la façon la plus indépendante possible de l'échelle, du cadrage, de l'angle d'observation et de l'exposition (luminosité). Les descripteurs présentent l'avantage d'être invariants à l'orientation et à la résolution de l'image.

La définition d'un ensemble de points remarquables peut être mise en œuvre par tout moyen connu, par exemple par l'un au moins parmi :

Un détecteur de Moravec,
Un détecteur de Kitchen-Rosenfeld,
Un détecteur de Beaudet,
Un détecteur SUSAN,
Un détecteur FAST,
Un détecteur de Hessian-Laplace,
Un détecteur de Kadir,
Un détecteur MSER (accronyme de *Maximally Stable Extremal Regions en anglais*),
Un détecteur GLOH (Gradient Location and Orientation Histogram en anglais),
Un détecteur de Harris,
Un algorithme de transformation de caractéristiques visuelles invariante à l'échelle,
Un algorithme de caractéristiques robustes accélérées,
Un algorithme de détection de points biométriques,
Un opérateur de dérivation, en particulier une différence de gaussiennes, et
Un algorithme de détection de contours, en particulier un Laplacien de gaussienne.

Un algorithme de transformation de caractéristiques visuelles invariante à l'échelle est plus connu sous son acronyme SIFT pour "Scale Invariant Feature Transform" en anglais.

Pour l'algorithme SIFT, décrit notamment dans la publication D. Lowe. Object recognition from local scale-invariant features. IEEE International Conference on Computer Vision, pages 1150-1157, 1999, la détection des points est basée sur les différences des gaussiennes (DoG) obtenues par le calcul de la différence entre chaque couple d'images lissées par un filtre gaussien, en variant à chaque fois le paramètre sigma (c'est à dire la déviation standard) du filtre. Les DoG peuvent être calculé pour différents niveaux d'échelle permettant d'introduire la notion de l'espace d'échelle. La détection des potentielles zones de points d'intérêt / points remarquables s'effectue en recherchant les extrema selon le plan de la dimension de l'image (x,y) et le plan du facteur d'échelle. Ensuite une étape de filtrage est nécessaire pour supprimer les points non pertinents, en éliminant par exemple les points dont le contraste est trop faible.

Un algorithme de caractéristiques robustes accélérées est plus connu sous son acronyme SURF pour "Speeded Up Robust Features" en anglais. Il est décrit notamment dans la publication H. Bay, T. Tuylelaars, and L. Van Gool. Surf : Speeded up robust features. European Conference on Computer Vision, pages 404-417, 2006, la méthode consiste à utiliser le déterminant de la matrice Hessienne, à calculer une approximation des dérivées secondes des gaussiennes de l'image par le biais de filtres à différentes échelles en utilisant des masques de différentes tailles (par exemple 9 x 9, 15 x 15, 21 x 21, ...). Pour le calcul de l'orientation des points et les descripteurs autour des points, le principe est basé sur les sommes des réponses des ondelettes de Haar horizontales et verticales ainsi que leurs normes. La zone circulaire de description est divisée là encore en 16 régions. Une analyse en ondelettes est effectuée sur chaque région afin de construire le descripteur final. Ce dernier est constitué de la somme des gradients en x et en y ainsi que de la somme de leur norme respective pour l'ensemble des 16 régions. Le vecteur descripteur est ainsi constitué de 64 valeurs qui représentent des propriétés extraites à la fois dans l'espace normal et dans celui des échelles de grandeur.

Un point remarquable peut être un point biométrique si l'image candidate comprend un visage. Pour la détection de points biométriques, on peut appliquer un logiciel basé sur la bibliothèque logicielle DLIB, et qui détermine la position d'un ensemble de points biométriques prédéterminés, chaque point correspondant à un élément morphologique prédéterminé d'un visage, par exemple le coin de l'oeil droit, le coin de l'oeil gauche, le bas du nez, les coins de la bouche, etc..

Dans un mode de réalisation, on prévoit d'effectuer une détection globale des points remarquables sur l'image candidate prise dans sa globalité.

Alternativement, on prévoit d'effectuer une détection des points remarquables au travers d'une fenêtre glissante, de préférence non superposée et en l'espèce adjacente, appliquée sur l'image candidate et permettant de sélectionner un ensemble de sous-images, chaque sous-image correspondant à la partie de l'image candidate inscrite dans la fenêtre glissante à un instant donné.

De préférence, on prévoit que chaque sous-image comprend un nombre de points remarquables supérieur à une valeur seuil prédéterminée. A cet effet, on peut prévoir d'agrandir la taille de la fenêtre glissante. On peut aussi ajuster un seuil de rejet, par exemple sur le contraste, notamment lors de la mise en œuvre d'un algorithme SIFT.

On peut ainsi conserver les points remarquables sur les contours et dans les zones de gradient faible, ou par « faible » on entend inférieur à une valeur seuil prédéterminée.

Les points remarquables sont nécessairement « définis ». Par concision, le terme « défini » sera généralement omis dans la suite de la présente description.

Alternativement ou en combinaison aux points remarquables, on peut prévoir des sous-images de l'image candidate auxquelles on applique un algorithme tel que PatchMatch (The Generalized PatchMatch Correspondence Algorithm, Connelly Barnes & al. ; in K. Daniilidis, P. Maragos, N. Paragios (Eds.): ECCV 2010, Part III, LNCS 6313, pp. 29-43, 2010.)

On peut prévoir que chaque sous-image a comme centre un point remarquable respectif.

**Sélection**

On peut prévoir une étape de sélection de certains des points remarquables, en particulier si ceux-ci sont très nombreux.

Par exemple, la sélection peut être réalisée par un opérateur. À cet effet, celui-ci peut être équipé d'un dispositif de pointage (souris, stylet, écran tactile, etc.).

Il peut ainsi sélectionner un ensemble d'au moins une zone de l'image candidate qui lui paraît suspecte.

La sélection peut également être réalisée automatiquement, en particulier sur des images candidates représentant un objet normé.

Par exemple, un objet normé est un document d'identité qui comprend des zones ou des champs dont la position et les dimensions sont connues, par exemple la zone MRZ sur un passeport, normé par l'ICAO, ou toute autre zone de contenu alphanumérique.

Il est donc possible de ne sélectionner que les points remarquables positionnés dans certains champs ou certaines zones.

L'étape de sélection de certains points remarquables est optionnelle, c'est à dire que l'on peut prévoir de sélectionner tous les points remarquables de l'image candidate.

A ce stade, si les points remarquables sont illustrés sur l'image candidate, il n'est pas encore possible de déterminer si une partie de l'image candidate a été clonée dans celle-ci.

Une fois les points remarquables définis, on prévoit une étape de comparaison, qui permet de déterminer si certaines zones de l'image candidate sont ressemblantes.

A cet effet, on prévoit de comparer les points remarquables deux à deux, c'est à dire de comparer chaque point remarquable avec chaque autre point remarquable de l'ensemble des points remarquables sélectionnés.

En l'espèce les points remarquables sont caractérisés par des vecteurs.

Cette étape de comparaison est une mise en relation de points remarquables sous forme de couples de points remarquables qui permet d'établir une vraisemblance entre deux points remarquables par le calcul d'une métrique qui se présente sous forme d'une distance vectorielle.

Mise en relation

On peut en effet mettre en relation, indistinctement mettre en correspondance, tous les points remarquables « proches ».

Par « proche », on entend dont la distance vectorielle est inférieure à une valeur seuil prédéterminée.

Par exemple, la mise en correspondance classique de descripteurs SIFT prévoit un algorithme qui recherche les zones de l'image candidate qui contiennent des éléments visuellement similaires à ceux d'une bibliothèque d'images de référence.

Au contraire ici, il n'y a pas de bibliothèque d'images de référence, les points remarquables sont comparés deux à deux dans la même image candidate, mais selon le même principe.

Selon une première variante de la présente invention, la mise en correspondance est la méthode dite « 2NN » décrite pour les descripteurs SIFT par David G. Lowe. dans l'article « Distinctive image features from scaleinvariant keypoints. » (International Journal of Computer Vision, 60(2) :91-110, Nov 2004).

Elle est applicable aux autres descripteurs évoqués précédemment.

Pour un point remarquable donné, la méthode consiste à trouver les deux voisins les plus proches dudit point remarquable, situés respectivement à une distance d1 et d2 (d1 <d2), parmi n points remarquables (n entier naturel).

On considère qu'une mise en correspondance est positive entre ledit point remarquable et le plus proche voisin si le rapport d1/d2 est inférieur à un seuil D prédéterminé, compris entre 0 et 1, en l'espèce égal à 0,6.

On a ainsi une mise en correspondance si la distance au premier plus proche voisin est faible et si la distance au 2ème plus proche voisin est également faible. Par distance « faible », on entend inférieure à une valeur seuil prédéterminée. Pour mettre en correspondance, on veut la distance d1 au premier plus proche voisin soit significativement plus faible que la distance d2 au second plus proche voisin ; d1 et d2 étant les distances entre les descripteurs et non des distances spatiales.

Cette variante permet de détecter si un élément graphique d'une image candidate n'est dupliqué que de manière unique dans ladite image, ce qui en pratique peut-être relativement rare.

Pour cette raison, **selon une deuxième variante de la présente invention,** on prévoit une méthode dite g2NN, qui est une généralisation de la méthode 2NN précédente, et dans laquelle le test 2NN est en fait itéré pour les k plus proches voisins d'un point remarquable donné, avec k un entier naturel compris entre 1 et n-1.

On teste alors les rapports de distance dk / dk+1 (k variant de 1 à n-1) au k-ièmes plus proches voisins, de manière itérative en faisant varier la valeur de k par incrémentation de 1, jusqu'à la valeur de k pour laquelle le ratio dk / dk+1 devient supérieur à la valeur d'un seuil DL prédéterminé, qui peut être égal à la valeur du seuil D précédent, et pour laquelle l'itération s'arrête alors. On considère qu'une mise en correspondance est positive si le rapport dk / dk+1 est inférieur au seuil DL prédéterminé.

Pour un point remarquable donné, tous les points remarquables i-èmes plus proches voisins (i compris entre 1 et k) vérifiant que le ratio di / di+1 est infpérieur à la valeur du seuil DL sont mis en relation.

Cette itération est mise en oeuvre pour chaque point remarquable, ce qui permet de détecter un ensemble de clones, c'est à dire de détecter si un élément graphique d'une image candidate a été dupliqué plusieurs fois dans ladite image.

Cette variante est décrite pour des descripteurs SIFT dans l'article de Amerini & al. « A siftbased forensic method for copy-move attack detection and transformation recovery. » (IEEE Transactions on Information Forensics and Security, 6(3) :1099-1110, Sep. 2011).

Les points remarquables mis en relation forment un couple de points. Leur mise en relation peut être affichée sur un écran d'affichage, en particulier en affichant un graphisme prédéterminé en superposition de l'image candidate.

En l'espèce, on prévoit que chaque couple de points remarquables est illustré par un segment de droite reliant lesdits points remarquables. On peut aussi prévoir de coloriser les segments de droite. Par exemple, on peut prévoir que tous les segments de droite parallèles entre eux sont colorisés d'une même couleur, en particulier ceux de même longueur.

Comme il existe une correspondance entre un point remarquable donné et un ensemble de pixels (adjacents deux à deux) de l'image candidate, un couple de points remarquables mis en relation signifie donc que les ensembles de pixels correspondant se ressemblent.

Par conséquent, cela signifie sur l'image candidate que l'un des ensembles de pixels peut être une copie de l'autre ensemble de pixels ; autrement dit cela peut signifier l'un des ensembles de pixels a subi une loi de transformation (translation, redimensionnement, rotation) de l'autre ensemble de pixels.

Cette caractéristique est avantageusement utilisée pour créer un ensemble de partitions.

## Partitionnement

Une partition est un ensemble d'au moins deux couples de points remarquables mis en relation, et de préférence d'au moins 3 couples de points remarquables mis en relation, qui ont subi la même loi de transformation (translation, redimensionnement, rotation).

Graphiquement, cela peut être illustré par un ensemble de segments de droite parallèles entre eux, sensiblement de même longueur et proches les uns des autres. Par « proche », on entend que la distance la plus courte séparant deux segments de droite parallèles et adjacents est inférieure à une valeur seuil prédéterminée.

On peut donc afficher les partitions sur l'image candidate.

Ainsi, plus une partition comprend de couples de points remarquables mis en relation, plus la probabilité que l'un des ensembles de pixels correspondant soit une copie de l'autre est grande.

Par exemple on définit un ensemble de partitions tel que décrit dans Bernard A. Galler and Michael J. Fisher. « An improved equivalence algorithm .» Commun. ACM, 7(5) :301-303, May 1964, qui permet de grouper des éléments selon des règles d'équivalences.

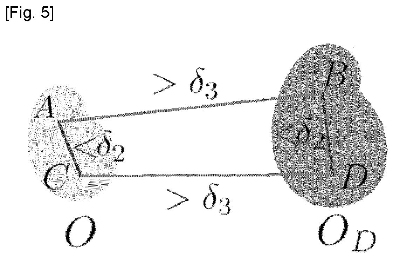

La figure 5 illustre un élément graphique O, dit « de départ », d'une image candidate, qui est copié et dupliqué (cloné) en élément graphique OD, dit « d'arrivée », dans la même image candidate. En l'espèce OD est la duplication de O avec une légère rotation et une légère modification d'échelle.

Les points A et C sont deux points remarquables de l'élément graphique (ou objet) O, et les points B et D sont deux points remarquables de l'élément graphique (ou objet) OD, correspondant respectivement aux points remarquables A et C.

La mise en correspondance entre A et B et la mise en correspondance entre C et D permet de définir le vecteur $\overrightarrow{AB}$ et le vecteur $\overrightarrow{CD}$.

Les mises en correspondance entre le couple de points remarquables (A ; B) et entre le couple de points remarquables (C ; D) sont considérées comme équivalents et sont groupées, si les inégalités suivantes sont vérifiées :

$$D1 > ||\overrightarrow{AB} - \overrightarrow{CD}||$$

(où ||X|| représente la norme de X) ;

$$D2 > || AC || \text{ et } D2 > || BD || ;$$

$$D3 < || AB || \text{ et } D3 < || CD ||.$$

avec D1, D2 et D3 trois valeurs seuil prédéfinies.

Le seuil D1 permet de limiter l'écart entre deux vecteurs formés par deux paires de points remarquables mis en correspondance. Ceci permet de grouper les mises en correspondance d'orientation proche. Grâce au seuil D1, les points remarquables mis en correspondance sont sensiblement dans la même direction ; c'est à dire que les segments de droite sont sensiblement parallèles. Une valeur faible de D1 tend à augmenter le nombre de partitions.

Le seuil D2 fixe la taille maximale de l'objet dupliqué OD. Une valeur trop grande tend à ajouter des faux positifs dans les partitions. Le seuil D2 permet de s'assurer que les points remarquables de l'élément graphique de départ (A et C sur l'objet O) sont proches ; et que les points remarquables de l'élément graphique d'arrivée (B et D sur l'objet OD) sont proches également.

Le seuil D3 permet de garantir que l'objet O est intégralement dupliqué en objet OD, sans recouvrement. Le seuil D3 permet de s'assurer que les points remarquables de l'élément graphique de départ (objet O) sont suffisamment distants des points remarquables de l'élément graphique d'arrivée (objet OD).

Une partition comprend l'ensemble des couples de points remarquables mis en relation qui répondent aux inégalités ci-dessus. De préférence, on prévoit que chaque partition comprend au moins 3 couples de points remarquables mis en relation.

A ce stade, il est possible de détecter qu'un élément graphique d'une image candidate a probablement été dupliqué dans celle-ci. Or il peut subsister des faux positifs, notamment dans le cas d'une image candidate comprenant des structures répétitives (par exemple une façade d'un bâtiment, un texte avec de nombreux caractères, etc.).

On peut donc mettre en oeuvre une étape supplémentaire de filtrage par carte de dissimilarité locale (CDL).

Alternativement au partitionnement décrit ci-dessus, on peut prévoir d'autres méthodes de partitionnement non supervisé, par exemple :

- l'application d'un algorithme CURE (https://en.wikipedia.org/wiki/CURE_algorithm)
- l'application d'un algorithme OPTICS (https://en.wikipedia.org/wiki/OPTICS_algorithm)
- l'application d'un algorithme DBSCAN (https://fr.wikipedia.org/wiki/DBSCAN)

**Carte de dissimilarité locale**

Une carte de dissimilarité locale (CDL) permet de mesurer les écarts locaux entre deux images binaires, c'est à dire deux images en noir et blanc (pas en niveaux de gris).

Le calcul d'une carte de dissimilarité locale est une version modifiée de la distance de Hausdorff, il est notamment décrit par Morain-Nicolier, Frédéric & LANDRE, Jérome & Ruan, Su. (2009). « Détection d'objet par mesure de dissimilarités locales. ».

On définit par CDLbin la CDL de deux images binaires A et B comme étant :

$$CDLbin(A,B)(p) = |A(p)-B(p)| \max[dA(p), dB(p)]$$

avec p = (x; y) et dX(p) la transformée en distance de l'image X au point p, où en l'espèce X = A ou B.

L'application d'une carte de dissimilarité locale est connue notamment dans le domaine médical pour la recherche de tumeurs, comme décrit par exemple dans l'article « Localisation de tumeurs dans des séquences TEP, par détection de changements au moyen de dissimilarités locales » Ketata et al. (CORESA 2013 - 16ème édition du colloque COmpression et REprésentation des Signaux Audiovisuels Le Creusot, FRANCE, 28 et 29 novembre 2013).

Au contraire, on prévoit ici de comparer les écarts locaux entre une première image binaire et une deuxième image binaire, qui sont des sous-images de l'image candidate, ce qui permet d'avoir un temps de calcul plus rapide.

On obtient d'abord une première sous-image par application d'un masque numérique comprenant une première fenêtre F1 sur l'image candidate, ce qui permet d'extraire la partie de l'image candidate inscrite dans la première fenêtre F1. En l'espèce, la première fenêtre F1 présente une forme prédéterminée qui est centrée sur un point remarquable de l'objet de départ O.

De manière similaire, on obtient ensuite une deuxième sous-image par application d'un masque numérique comprenant une deuxième fenêtre F2 sur l'image candidate, ce qui permet d'extraire la partie de l'image candidate inscrite dans la deuxième fenêtre F2. En l'espèce, la deuxième fenêtre F2 présente une forme prédéterminée qui est centrée sur le point remarquable de l'objet d'arrivée OD correspondant au point remarquable de la première fenêtre F1.

Ainsi la première fenêtre F1 et la deuxième fenêtre F2 permettent d'extraire les deux points remarquables d'un couple d'une même partition.

Et de même pour l'ensemble des couples de points remarquables mis en relation pour l'ensemble des partitions.

La forme de la fenêtre F1 est identique à celle de la fenêtre F2. La taille de la fenêtre F2 est égale à celle de la fenêtre F1, au facteur d'échelle près. Le contenu des deux fenêtres est aligné en fonction de l'angle des points remarquables associés. En effet, les structures à l'intérieur des deux fenêtres F1 et F2 peuvent ne pas alignées (en terme d'angle) au début du traitement. Chaque point remarquable indique l'orientation de la structure analysée. Pour aligner les structures à l'intérieur des fenêtres F1 et F2 on peut au choix :

- Calculer le delta entre les deux angles pour aligner F1 à F2 ou inversement (l'une des structures est alignée par rapport à l'autre).
- Effectuer une rotation égale à l'inverse des angles des fenêtres F1 et F2 (Les deux structures sont alignées avec l'angle nul).

**Si** l'image candidate est une image déjà binaire, alors la première image binaire utilisée pour le calcul de la carte de dissimilarité locale est la première sous-image obtenue par la première fenêtre F1, et la deuxième image binaire utilisée pour le calcul de la carte de dissimilarité local est la deuxième sous-image obtenue par la deuxième fenêtre F2.

On calcule alors CDL(F1, F2) la CDL entre la première sous-image obtenue par la première fenêtre F1, et la deuxième sous-image obtenue par la deuxième fenêtre F2, pour chaque couple de points remarquables mis en relation.

Puis on compare CDL(F1, F2) à un seuil D_CDL prédéterminé et :

- si CDL(F1, F2) > D_CDL alors le couple de points remarquables mis en relation n'est pas considéré comme un copier/coller,
- si CDL(F1, F2) < D_CDL alors le couple de points remarquables mis en relation est considéré comme un copier/coller et on prévoit par exemple de mettre en valeur graphiquement sur un écran d'affichage lesdits points remarquables ou les fenêtres F1 et F2 correspondantes.

La mise en valeur graphique peut être au moins parmi : une modification de la valeur des pixels (couleur, luminance), afficher un cadre autour des points remarquable ou afficher un cadre à la périphérie des fenêtres F1 et F2, par exemple en pointillés ou en couleur, etc.

Si l'image candidate est en niveaux de gris, elle est découpée en plusieurs images binaires.

Par exemple, la valeur maximale et la valeur minimale des pixels de l'image candidate sont enregistrées dans une mémoire. L'écart entre la valeur maximale et la valeur minimale est divisé en plusieurs valeurs seuil intermédiaire, de préférence à intervalles réguliers.

Pour une première valeur de seuil intermédiaire, tous les pixels dont la valeur est inférieure à la valeur dudit seuil intermédiaire sont remplacés par du noir et tous les pixels dont la valeur est supérieure à la valeur dudit seuil intermédiaire sont remplacés par du blanc. On obtient ainsi une première image binaire. Ensuite, on fait varier la valeur du seuil et une deuxième image binaire est obtenue avec une deuxième valeur de seuil intermédiaire. Et ainsi de suite pour l'ensemble des valeurs de seuil intermédiaire.

On obtient ainsi N images binaires, avec N un entier naturel égal au nombre de valeurs de seuil choisies, c'est à dire le nombre de coupes.

Pour chaque image binaire i (i compris entre 1 et N), on calcule CDL_i(F1, F2) la CDL entre la première sous-image obtenue par la première fenêtre F1, et la deuxième sous-image obtenue par la deuxième fenêtre F2, pour chaque couple de points remarquables mis en relation.

On peut ensuite calculer la CDL pondérée de l'ensemble des N images binaires, c'est à dire que l'on calcule CDL(F1, F2) = 1/N Σ CDL_N(F1, F2).

Plus généralement, on peut calculer la CDL globale de l'ensemble des N images binaires comme étant :

$$CDL(A,B)(p) = \frac{1}{N}\sum_{i=1}^{N} CDLbin\,(Ai, Bi)(p)$$

Avec $A_i$ (respectivement $B_i$) une coupe binaire i de A (respectivement B), i compris entre 1 et N.

Puis on compare CDL(F1, F2) à un seuil D_CDL prédéterminé, comme décrit ci avant.

**Si** l'image candidate est en **couleurs,** elle peut être enregistrée en niveaux de gris et traitée comme décrit ci-dessus.

Alternativement, on peut prévoir de convertir l'image candidate dans un espace colorimétrique à 3 dimensions, ou 3 canaux, en l'espèce dans l'espace RGB ou dans l'espace CIE XYZ.

L'image candidate est découpée en C images binaires, avec C un entier naturel correspondant au nombre de canaux, en l'espèce égale à 3.

On peut alors traiter chacune des C images binaires de manière similaire aux N images binaires obtenues lorsque l'image candidate est en niveaux de gris.

Ainsi pour chaque image binaire C, on calcule CDL_C(F1, F2) a CDL entre la première sous-image obtenue par la première fenêtre F1, et la deuxième sous-image obtenue par la deuxième fenêtre F2, pour chaque couple de points remarquables mis en relation.

On peut ensuite calculer la CDL pondérée de l'ensemble des C images binaires, c'est à dire que l'on calcule CDL(F1, F2) = 1/C Σ CDL_C(F1, F2).

Plus généralement, on peut calculer la CDL globale de l'ensemble des C images binaires comme étant :

$$CDL\_XYZ(A,B)(p) = \frac{1}{3}\sum_{k=1}^{3} CDL\left(A^k, B^k\right)(p)$$

Avec dans ce cas C=3

Pour deux images binaires on a :

$$CDLbin(A,B)(p) = |A(p)-B(p)|\ \max[dA(p), dB(p)]$$

Pour deux images en niveau de gris on a :

$$CDL(A,B)(p) = \frac{1}{N}\sum_{i=1}^{N} CDLbin\,(Ai, Bi)(p)$$

Avec N entier naturel au plus égal au nombre de niveaux de gris, et en l'espèce égal au nombre d'images binaires issues du traitement de l'image originale en niveaux de gris.

Pour deux images avec C canaux on a :

$$CDL\_C(A,B)(p) = \frac{1}{C} \sum_{k=1}^{C} CDL\left(A^k, B^k\right)(p)$$

Avec C le nombre de canaux, et Ak le canal k ∈ (X;Y; Z) de l'image A.

Puis on compare CDL(F1, F2) à un seuil D_CDL prédéterminé, comme décrit ci avant.

Pour augmenter la vitesse de comparaison, on peut prévoir de regrouper préalablement les caractères, caractère par caractère, de sorte que chaque groupe ne comprend qu'un seul type de caractère : un groupe ne comprend que des caractères A, un autre groupe ne comprenant que des caractères B, etc.

La comparaison peut alors s'effectuer par groupe, de sorte à ne comparer des A qu'avec des A, des B qu'avec des B, etc.

**Apprentissage**

On peut prévoir que la comparaison est mise en oeuvre, à titre d'alternative ou en complément des modes de réalisation précédents, par intelligence artificielle, et plus précisément par un algorithme d'apprentissage profond.

On prévoit dans ce cas une étape préalable d'apprentissage par un algorithme d'apprentissage profond.

Cet algorithme est configuré pour classer des caractères ou des paquets de caractères dans un ensemble d'au moins une classe, par exemple une classe « vrai » et une classe « faux ». D'autres classes peuvent être envisagées.

**Pendant l'étape** d'apprentissage, l'algorithme d'apprentissage profond est entrainé avec des caractères ou des paquets de caractères connus comme appartenant à l'une des classes de l'algorithme, par exemple la classe « vrai », et l'algorithme apprend sur cette base.

Une fois entrainé, les caractères ou des paquets de caractères extraits des images candidates sont traités par l'algorithme et classés par celui-ci dans l'une de ses classes.

Avantageusement, on peut prévoir de détecter la position de chaque caractère ou de chaque paquet de caractères dans l'image candidate.

Grâce à cette caractéristique, à l'issue de l'étape de comparaison, on peut connaître, et donc afficher les caractères ou les paquets de caractères qui ont été copiés / collés.

On peut aussi prévoir de comparer les caractères individuels adjacents extraits deux à deux, ou les paquets de caractères adjacents extraits deux à deux, par exemple par enregistrement de la colorimétrie, des gradients d'intensité, etc. de chaque boîte englobante, et en particulier du fond de chaque boîte englobante.

Ainsi, en partant du principe que deux boîtes englobantes adjacentes présentent un fond similaire, il est possible de déterminer quel caractère ou quel paquet de caractères a été copié et où celui-ci a été collé.

Dans le cas d'un nom ou d'un prénom par exemple, il est ainsi possible de reconstituer le nom ou le prénom d'origine.

La présente invention permet de détecter la recopie d'un élément graphique d'une image, même si ledit élément graphique a subi un post-traitement (ré-échantillonnage, ajustement des couleurs ou du contraste, etc.) sans pour autant identifier l'objet d'origine de l'objet recopié.

La présente invention peut être appliquée à tout type d'image, notamment une image d'un document d'identité, une image d'une œuvre d'art, une image d'un emballage.

Elle participe donc à la lutte contre la fraude, en particulier :

- contre l'usurpation d'identité, par exemple en détectant des modifications de caractères d'un nom, prénom, lieu, date, etc. dans une image d'un document d'identité,
- contre la contrefaçon, par exemple en détectant la modification d'un numéro de série d'un emballage ou d'une marque, etc. dans une image d'un emballage ou d'une étiquette,
- contre blanchiment de capitaux et de financement du terrorisme, par exemple en détectant la modification d'un numéro ou du montant dans une image d'un document fiduciaire, par exemple une facture.

**Revendications**

**1.** Procédé de traitement endogène d'une image candidate, pour détecter si une partie de l'image candidate a été déplacée au sein de ladite image, ladite image candidate étant unique et représentant un document comprenant une pluralité de caractères, **caractérisé en ce qu'**il comprend des étapes consistant à :

- Sélectionner un ensemble de caractères parmi tout ou partie de la pluralité de caractères, ledit ensemble de caractères pouvant comprendre au moins deux sous-ensembles de caractères,
Dans l'ensemble sélectionné,

- Extraire au moins l'un parmi :

au moins un ensemble de caractères individuels,
au moins un paquet de caractères, chaque paquet comprenant une pluralité de caractères adjacents deux à deux,

- Enregistrer les caractères extraits individuellement ou par paquet dans une mémoire,
- Comparer les caractères enregistrés deux à deux, et
- Emettre un signal représentatif du résultat de la comparaison.

2. Procédé selon la revendication 1, dans lequel l'étape de sélection comprend des étapes consistant à :

- appliquer un masque de sélection prédéterminé à l'image candidate, le masque comprenant un ensemble d'au moins une fenêtre,
- sélectionner les caractères compris dans l'ensemble d'au moins une fenêtre,

l'étape de sélection comprenant optionnellement en outre :

- repérer un ensemble d'au moins un point remarquable sur l'image candidate, et
- positionner le masque de sélection en fonction de la position d'au moins un point remarquable dudit ensemble.

3. Procédé selon l'une quelconque des revendications précédentes, dans lequel l'étape d'extraction comprend :

- Extraire chaque caractère individuel de l'ensemble, ou chaque paquet de caractères de l'ensemble, par une boite englobante respective et
- Enregistrer chaque boite englobante sous forme d'une sous-image respective (F1, F2).

4. Procédé selon l'une quelconque des revendications précédentes, dans lequel l'étape de comparaison comprend :

- calculer une carte de dissimilarité locale entre :

une première sous-image (F1) d'un caractère ou d'un paquet de caractères de l'image candidate, et
une deuxième sous-image (F2) d'un autre caractère ou d'un autre paquet de caractères de l'image candidate,

- comparer ladite carte de dissimilarité locale à une valeur seuil (D_CDL).

5. Procédé selon l'une quelconque des revendications précédentes, comprenant en outre une étape préalable d'apprentissage par un algorithme d'apprentissage profond configuré pour classer des caractères ou des paquets de caractères dans un ensemble d'au moins une classe, et dans lequel l'étape de comparaison comprend :

- traiter chaque caractère individuel ou chaque paquet de caractères extrait par l'algorithme d'apprentissage profond, et
- classer ledit caractère ou ledit paquet de caractères dans au moins une classe dudit ensemble de l'algorithme d'apprentissage profond.

6. Procédé selon l'une quelconque des revendications 3 à 5, comprenant en outre une étape consistant à, pour un ensemble de sous-images prédéterminé, détourer le caractère ou les caractères du paquet pour au moins une sous-image dudit ensemble.

7. Procédé selon l'une quelconque des revendications 4 à 6, dans lequel l'étape de calcul d'une carte de dissimilarité comprenant des étapes consistant à :

- définir un ensemble de points remarquables sur l'image candidate,
- sélectionner une partie au moins des points remarquables définis,
- mettre en correspondance un ensemble de points remarquables pour former des couples de points remarquables,
- partitionner les couples de points remarquables mis en correspondance, et

pour chaque couple de chaque partition,

- calculer une carte de dissimilarité locale entre :

une première sous-image (F1) de l'image candidate présentant une forme prédéterminée centrée sur un point remarquable dudit couple de ladite partition, et
une deuxième sous-image (F2) de l'image candidate, qui présente la même forme prédéterminée et les mêmes dimensions que la première sous-image (F1), et qui est centrée sur l'autre point remarquable dudit couple de ladite partition.

8. Procédé selon la revendication 7, dans lequel l'étape de définition d'un ensemble de points remarquables sur l'image candidate est mise en œuvre par l'un au moins parmi :

Un détecteur de Moravec,
Un détecteur de Kitchen-Rosenfeld,
Un détecteur de Beaudet,
Un détecteur SUSAN,
Un détecteur FAST,
Un détecteur de Hessian-Laplace,
Un détecteur de Kadir,
Un détecteur MSER,
Un détecteur GLOH,
Un détecteur de Harris,
Un algorithme de transformation de caractéristiques visuelles invariante à l'échelle,
Un algorithme de caractéristiques robustes accélérées,
Un algorithme de détection de points biométriques,
Un opérateur de dérivation, en particulier une différence de gaussiennes, et
Un algorithme de détection de contours, en particulier un Laplacien de gaussienne.

9. Procédé selon l'une quelconque des revendications 7 ou 8, dans lequel pour l'étape consistant à partitionner les couples de points remarquables mis en correspondance,

Chaque partition comprend l'ensemble des couples de points remarquables mis en relation qui répondent aux trois inégalités :

-

$$D1 > ||\overrightarrow{AB} - \overrightarrow{CD}|| \ ;$$

-

$$D2 > ||\overrightarrow{AC}|| \text{ et } D2 > ||\overrightarrow{BD}|| \ ;$$

-

$$D3 < ||\overrightarrow{AB}|| \text{ et } D3 < ||\overrightarrow{CD}||.$$

Avec D1, D2 et D3 trois valeurs seuil prédéfinies,

(A ; B) un premier couple de points remarquables mis en correspondance,
(C ; D) un deuxième couple de points remarquables mis en correspondance ;

Ou comprend l'ensemble des couples de points remarquables mis en relation par un algorithme de partitionnement.

10. Programme d'ordinateur comprenant des instructions de code de programme pour l'exécution des étapes du procédé selon l'une quelconque des revendications précédentes, lorsque ledit programme est exécuté sur un ordinateur.

# EP 4 091 098 B1

**Patentansprüche**

1. Verfahren zur endogenen Verarbeitung eines Kandidatenbilds, um zu erkennen, ob ein Teil des Kandidatenbilds in dem Bild bewegt worden ist, wobei das Kandidatenbild einmalig ist und ein Dokument darstellt, das eine Mehrzahl von Zeichen umfasst, **dadurch gekennzeichnet, dass** es Schritte umfasst, die darin bestehen:

   - Eine Zeichenmenge unter der gesamten oder einem Teil der Mehrzahl von Zeichen auszuwählen, wobei die Zeichenmenge mindestens zwei Zeichenteilmengen umfassen kann,

   In der ausgewählten Menge,

   - Mindestens eines zu extrahieren unter:

      mindestens einer Menge von individuellen Zeichen,
      mindestens einem Zeichenpaket, wobei jedes Paket eine Mehrzahl von paarweise benachbarten Zeichen umfasst,

   - Die individuell oder paketweise extrahierten Zeichen in einem Speicher zu speichern,
   - Die gespeicherten Zeichen paarweise zu vergleichen, und
   - Ein für das Ergebnis des Vergleichs repräsentatives Signal auszugeben.

2. Verfahren nach Anspruch 1, wobei der Schritt des Auswählens Schritte umfasst, die darin bestehen:

   - eine vorbestimmte Auswahlmaske auf das Kandidatenbild anzuwenden, wobei die Maske eine Menge mindestens eines Fensters umfasst;
   - die Zeichen auszuwählen, die in der Menge mindestens eines Fensters enthalten sind,

   wobei der Schritt des Auswählens optional ferner umfasst:

   - Ausfindigmachen einer Menge aus mindestens einem Kennpunkt auf dem Kandidatenbild, und
   - Positionieren der Auswahlmaske in Abhängigkeit von der Position mindestens eines Kennpunkts der Menge.

3. Verfahren nach einem der vorhergehenden Ansprüche, wobei der Schritt des Extrahierens umfasst:

   - Extrahieren jedes individuellen Zeichens der Menge oder jedes Zeichenpakets der Menge durch einen jeweiligen Begrenzungsrahmen und
   - Speichern jedes Begrenzungsrahmens in Form eines jeweiligen Teilbilds (F1, F2).

4. Verfahren nach einem der vorhergehenden Ansprüche, wobei der Schritt des Vergleichens umfasst:

   - eine Local Dissimilarity Map zu berechnen zwischen:

      einem ersten Teilbild (F1) eines Zeichens oder eines Zeichenpakets des Kandidatenbildes, und
      einem zweiten Teilbild (F2) eines anderen Zeichens oder eines anderen Zeichenpakets des Kandidatenbildes,

   - die Local Dissimilarity Map mit einem Schwellenwert (D_CDL) zu vergleichen.

5. Verfahren nach einem der vorhergehenden Ansprüche, das ferner einen vorherigen Schritt des Lernens durch einen Deep-Learning-Algorithmus umfasst, der dazu ausgestaltet ist, Zeichen oder Zeichenpakete in einer Menge mindestens einer Klasse zu klassifizieren, und wobei der Schritt des Vergleichens umfasst:

   - jedes individuelle Zeichen oder jedes Zeichenpaket, das von dem Deep-Learning-Algorithmus extrahiert wird, zu verarbeiten und
   - das Zeichen oder das Zeichenpaket in mindestens eine Klasse der Menge des Deep-Learning-Algorithmus zu klassifizieren.

6. Verfahren nach einem der Ansprüche 3 bis 5, umfassend ferner einen Schritt, der darin besteht, für eine vorbestimmte Menge von Teilbildern das Zeichen oder die Zeichen des Pakets für mindestens ein Teilbild der Menge zuzuschneiden.

7. Verfahren nach einem der Ansprüche 4 bis 6, wobei der Schritt des Berechnens einer Dissimilarity Map Schritte umfasst, die darin bestehen:

- eine Menge von Kennpunkten auf dem Kandidatenbild zu definieren,
- mindestens einen Teil der definierten Kennpunkte auszuwählen,
- eine Menge von Kennpunkten in Übereinstimmung zu bringen, um Paare von Kennpunkten zu bilden,
- die Paare von in Übereinstimmung gebrachten Kennpunkten zu partitionieren, und für jedes Paar jeder Partition,
- eine Local Dissimilarity Map zu berechnen zwischen:

einem ersten Teilbild (F1) des Kandidatenbilds, das eine vorbestimmte Form aufweist, die auf einen Kennpunkt des Paars der Partition zentriert ist, und

einem zweiten Teilbild (F2) des Kandidatenbilds, das die gleiche vorbestimmte Form und die gleichen Abmessungen wie das erste Teilbild (F1) aufweist und das auf den anderen Kennpunkt des Paars der Partition zentriert ist.

8. Verfahren nach Anspruch 7, wobei der Schritt des Definierens einer Menge von Kennpunkten auf dem Kandidatenbild von mindestens einem ausgeführt wird unter:

Einem Moravec-Detektor,
Einem Kitchen-Rosenfeld-Detektor,
Einem Beaudet-Detektor,
Einem SUSAN-Detektor,
Einem FAST-Detektor,
Einem Hessian-Laplace-Detektor,
Einem Kadir-Detektor,
Einem MSER-Detektor,
Einem GLOH-Detektor,
Einem Harris-Detektor,
Einem Algorithmus zur skaleninvarianten Transformation von visuellen Merkmalen,
Einem Algorithmus beschleunigter robuster Merkmale,
Einem Algorithmus zur Detektion von biometrischen Punkten,
Einem Derivationsoperator, insbesondere einer Differenz von Gauß-Funktionen, und
Einem Konturenerkennungsalgorithmus, insbesondere einem Laplacian-of-Gaussian-Algorithmus.

9. Verfahren nach einem der Ansprüche 7 oder 8, wobei bei dem Schritt, der darin besteht, die Paare von in Übereinstimmung gebrachten Kennpunkten zu partitionieren, Jede Partition die Menge der Paare von in Relation gebrachten Kennpunkten umfasst, welche die drei Ungleichungen erfüllen:

-

$$D1 > \left\| \overrightarrow{AB} - \overrightarrow{CD} \right\|;$$

-

$$D2 > \left\| \overrightarrow{AC} \right\| \text{ und } D2 > \left\| \overrightarrow{BD} \right\|;$$

-

$$D3 < \left\| \overrightarrow{AB} \right\| \text{ und } D3 < \left\| \overrightarrow{CD} \right\|.$$

Worin D1, D2 und D3 drei vorgegebene Schwellenwerte sind,
(A; B) ein erstes Paar von in Übereinstimmung gebrachten Kennpunkten ist,
(C; D) ein zweites Paar von in Übereinstimmung gebrachten Kennpunkten ist;

Oder die Menge der Paare von Kennpunkten umfasst, die durch einen Partitionierungsalgorithmus in Relation gebracht werden.

10. Computerprogramm, das Programmcodeanweisungen umfasst, die bei der Ausführung des Programms auf einem Computer die Schritte des Verfahrens nach einem der vorhergehenden Ansprüche ausführen.

## Claims

1. Method for endogenously processing a candidate image, in order to detect whether a part of the candidate image has been moved within said image, said candidate image being unique and representing a document comprising a plurality of characters, **characterized in that** it comprises steps consisting in:

- selecting a set of characters from among all or some of the plurality of characters, said set of characters being able to comprise at least two subsets of characters,

from the selected set,

- extracting at least one of:

at least one set of individual characters,
at least one packet of characters, each packet comprising a plurality of pairwise adjacent characters,

- storing the characters extracted individually or by packet in a memory,
- comparing the stored characters pairwise, and
- sending a signal which is representative of the result of the comparison.

2. Method according to Claim 1, wherein the selection step comprises steps consisting in:

- applying a predetermined selection mask to the candidate image, the mask comprising a set of at least one window,
- selecting the characters comprised in the set of at least one window,

the selection step optionally further comprising:

- locating a set of at least one remarkable point in the candidate image, and
- positioning the selection mask depending on the position of at least one remarkable point in said set.

3. Method according to either one of the preceding claims, wherein the extraction step comprises:

- extracting each individual character in the set, or each packet of characters in the set, through a respective bounding box and
- storing each bounding box in the form of a respective sub-image (F1, F2).

4. Method according to any one of the preceding claims, wherein the comparison step comprises:

- computing a map of local dissimilarity between:

a first sub-image (F1) of a character or of a packet of characters of the candidate image, and
a second sub-image (F2) of another character or of another packet of characters of the candidate image,

- comparing said map of local dissimilarity to a threshold value (D_CDL).

5. Method according to any one of the preceding claims, further comprising a prior step of learning by a deep learning algorithm configured to classify characters or packets of characters into a set of at least one class, and wherein the comparison step comprises:

- processing each individual character or each packet of characters extracted by the deep learning algorithm, and

- classifying said character or said packet of characters into at least one class of said set of the deep learning algorithm.

6. Method according to any one of Claims 3 to 5, further comprising a step consisting in, for a predetermined set of sub-images, cutting out the character or characters of the packet for at least one sub-image in said set.

7. Method according to any one of Claims 4 to 6, wherein the step of computing a dissimilarity map comprises steps consisting:

 - defining a set of remarkable points in the candidate image,
 - selecting at least some of the defined remarkable points,
 - matching a set of remarkable points in order to form pairs of remarkable points,
 - partitioning the pairs of matched remarkable points, and

for each pair of each partition,

 - computing a map of local dissimilarity between:

  a first sub-image (F1) of the candidate image having a predetermined shape centred on a remarkable point in said pair of said partition, and
  a second sub-image (F2) of the candidate image, which has the same predetermined shape and the same dimensions as the first sub-image (F1), and which is centred on the other remarkable point in said pair of said partition.

8. Method according to Claim 7, wherein the step of defining a set of remarkable points in the candidate image is implemented by at least one of:

  a Moravec detector,
  a Kitchen-Rosenfeld detector,
  a Beaudet detector,
  a SUSAN detector,
  a FAST detector,
  a Hessian-Laplace detector,
  a Kadir detector,
  an MSER detector,
  a GLOH detector,
  a Harris detector,
  an algorithm for scale-invariantly transforming visual characteristics,
  an algorithm of accelerated robust characteristics,
  an algorithm for detecting biometric points,
  a derivation operator, in particular a difference of Gaussians, and
  an algorithm for detecting edges, in particular a Laplacian of Gaussian.

9. Method according to either one of Claims 7 and 8, wherein, for the step consisting in partitioning the pairs of matched remarkable points,

each partition comprises all of the pairs of related remarkable points which satisfy the three inequalities:

 -

$$D1 > \left\| \overrightarrow{AB} - \overrightarrow{CD} \right\|;$$

 -

$$D2 > \left\| \overrightarrow{AC} \right\| \text{ and } D2 > \left\| \overrightarrow{BD} \right\|;$$

$$D3 < \left\| \overrightarrow{AB} \right\| \text{ and } D3 < \left\| \overrightarrow{CD} \right\|;$$

with D1, D2 and D3 being three predefined threshold values,
(A; B) a first pair of matched remarkable points,
(C; D) a second pair of matched remarkable points;
or comprises all of the pairs of remarkable points related by a partitioning algorithm.

10. Computer program comprising program code instructions for executing the steps of the method according to any one of the preceding claims when said program is executed on a computer.

[Fig. 1]

[Fig. 2]

[Fig. 3]

[Fig. 4]

[Fig. 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007050360 A

**Littérature non-brevet citée dans la description**

- **K. KHURSHID** ; **C. FAURE** ; **N. VINCENT.** Recherche de mots dans des images de documents par appariement de caractères. *Colloque International Francophone sur l'Ecrit et le Document*, October 2008, 91-96, https://hal.archives-ouvertes.fr/hal-00334401/document
- **D. LOWE.** Object recognition from local scale-invariant features. *IEEE International Conference on Computer Vision*, 1999, 1150-1157
- **H. BAY** ; **T. TUYLELAARS** ; **L. VAN GOOL**. Surf : Speeded up robust features. *European Conference on Computer Vision*, 2006, 404-417
- The Generalized PatchMatch Correspondence Algorithm. **CONNELLY BARNES**. ECCV 2010, Part III, LNCS. 2010, vol. 6313, 29-43
- **DAVID G. LOWE.** Distinctive image features from scaleinvariant keypoints.. *International Journal of Computer Vision*, November 2004, vol. 60 (2), 91-110
- **AMERINI**. A siftbased forensic method for copy-move attack detection and transformation recovery.. *IEEE Transactions on Information Forensics and Security*, September 2011, vol. 6 (3), 1099-1110
- **BERNARD A. GALLER** ; **MICHAEL J. FISHER.** An improved equivalence algorithm. *Commun. ACM*, May 1964, vol. 7 (5), 301-303
- **KETATA et al.** Localisation de tumeurs dans des séquences TEP, par détection de changements au moyen de dissimilarités locales. *CORESA 2013 - 16ème édition du colloque COmpression et REprésentation des Signaux Audiovisuels Le Creusot, FRANCE*, 28 November 2013